# EUROPÄISCHE PATENTSCHRIFT

(11) **EP 3 067 519 B1**
(45) Veröffentlichungstag und Bekanntmachung des Hinweises auf die Patenterteilung: **10.04.2019**
(21) Anmeldenummer: 16155260.9
(22) Anmeldetag: 11.02.2016
(51) Int. Cl.: F01D 5/16, F01D 5/34, F04D 29/66, F01D 5/28, F04D 29/02, F04D 29/32

(54) **FANSCHAUFEL FÜR EINEN FLUGANTRIEB**
FAN BLADE FOR A FLIGHT DRIVE
PALE DE SOUFFLANTE POUR UNE PROPULSION AÉRONAUTIQUE

(30) Priorität: 04.03.2015 DE 102015203868
(43) Veröffentlichungstag der Anmeldung: 14.09.2016
(73) Patentinhaber: Rolls-Royce Deutschland Ltd & Co KG, 15827 Blankenfelde-Mahlow (DE)
(72) Erfinder: ROSENAU, Knut, 15378 Herzfelde (DE)
(74) Vertreter: Maikowski & Ninnemann Patentanwälte Partnerschaft mbB

(56) Entgegenhaltungen:
- EP-A2- 2 458 153
- DE-A1-102006 046 070
- DE-T2- 60 008 980
- US-A- 4 895 491
- US-A1- 2010 104 446

## Beschreibung

Die Erfindung betrifft eine Fanschaufel für einen Flugantrieb gemäß dem Oberbegriff des Anspruchs 1.

Flugtriebwerke müssen in der Lage sein, einem Fanschaufelverlust standzuhalten. Ein Fanschaufelverlust liegt vor, wenn eine Schaufel eines Fans bricht und sich Schaufelsegmente separieren, was zu erheblichem Schaden am Triebwerk und dem gesamten Flugzeug führen kann. Insbesondere verursacht im Falle eines Fanschaufelverlustes von ganzmetallenen Fanschaufeln die anteilig radial weit außen liegende Masse der verlorenen Fanschaufel hohe Einschlagkräfte in das Fangehäuse. Um dies zu kompensieren, sind ein relativ schweres Fangehäuse, eine starke Frontlagerstruktur und ein relativ schwerer Fanrotor erforderlich. Diese bewirken hohe in die flugzeugseitige Triebwerksaufhängung eingeleitete Unwuchtkräfte, was wiederum zu dem Erfordernis führt, die Triebwerksaufhängung relativ schwer und massiv auszubilden. Durch die Notwendigkeit, einen Fanschaufelverlust kompensieren zu können, werden somit Gewicht und Kosten des Triebwerks und der Triebwerksaufhängung erheblich erhöht.

Es besteht dementsprechend ein Bedarf, die mit der Kompensierung eines Fanschaufelverlustes verbundenen Nachteile zu reduzieren.

Hierzu ist es bekannt, Fanschaufeln nicht massiv aus Metall, sondern in hybrider Weise auszubilden und dadurch deren Gewicht zu reduzieren. Beispielsweise beschreibt die US 2014/0072427 A1 die Aufbringung einer Wabenfüllung in Ausnehmungen ganzmetallischer Fanschaufeln. Die US 5 913 661 A beschreibt in eine Fanschaufel eingebrachte Nuten, die mit einem Elastomer gefüllt sind und die der Dämpfung von Fanschaufelschwingungen dienen. Weitere hybride Aufbauten von Fanschaufeln beschreiben die US 8 500 410 B2, die US 6 364 616 B1 und die US 5 655 883 A.

Die im Stand der Technik bekannten Lösungen zur Bereitstellung hybrider Fanschaufeln sind jedoch mit Nachteilen versehen. Beispielsweise sind Wabenfüllungen, die gemäß der US 2014/0072427 A1 in saugseitige Ausnehmungen von Fanschaufeln eingebracht sind, ungeeignet für eine Dämpfung gegen Schaufelschwingungen und anfällig gegen Rissbildung bei Überdehnung z.B. im Falle eines Vogelschlages. In den Grundkörper der Fanschaufel eingebrachte Nuten entsprechend der US 5 913 661 A bergen ebenfalls die Gefahr von Rissbildung im Falle einer Überdehnung, z. B. bei Vogelschlag.

Der vorliegenden Erfindung liegt die Aufgabe zugrunde, eine Fanschaufel für einen Flugantrieb bereitzustellen, die es ermöglicht, die Nachteile zu reduzieren, die durch die Notwendigkeit erzeugt werden, einen Flugantrieb gegen einen Fanschaufelverlust zu sichern.

Diese Aufgabe wird durch eine Fanschaufel mit den Merkmalen des Anspruchs 1 gelöst. Ausgestaltungen der Erfindung sind in den Unteransprüchen angegeben.

Danach zeichnet sich die erfindungsgemäße Lösung dadurch aus, dass die Fanschaufel eine großflächige Elastomerschicht aufweist, die zumindest 20% der Oberfläche der Saugseite der Fanschaufel bildet und deren Dicke in radialer Richtung nach außen zumindest abschnittsweise derart zunimmt, sodass die Dicke der Elastomerschicht mit zunehmender radialer Höhe der Schaufel entweder kontinuierlich zunimmt oder dass sie, nachdem sie eine gewisse Dicke erreicht hat, in ihrer Dicke konstant bleibt.

Hierdurch wird ein großflächiger Steifigkeitsübergang in radialer Richtung bereitgestellt, der kontinuierlich und stetig erfolgt und keine Steifigkeitssprünge beinhaltet, wie sie beispielsweise bei axial verlaufenden Rippen auftreten würden. Dabei wird die Schaufel nach außen hin immer weicher. Dies verbessert die Eigenschaft der Elastomerschicht, als Schwingungsdämpfer Schaufelschwingungen entgegen zu wirken.

Durch die Zunahme der Dicke der Elastomerschicht in radialer Richtung nach außen wird im Übrigen in zusätzlicher Weise eine Gewichtsreduzierung am radial äußeren Ende der Schaufel erreicht, an dem die Schaufel die höchste Rotationsgeschwindigkeit aufweist, und damit die Einschlaglast und die Umwuchtlast im Falle eines Fanschaufelverlustes in besonderem Maße reduziert. Hierbei geht die nach außen zumindest abschnittsweise zunehmende Dicke der Elastomerschicht mit einer nach außen zumindest abschnittsweise oder konstant abnehmenden Dicke eines metallischen Grundkörpers der Fanschaufel einher, auf den die Elastomerschicht aufgebracht ist. Derart nimmt mit zunehmendem Radius der Anteil an Metall an der Fanschaufel ab und das Gewicht der Fanschaufel zu einem radial äußeren Bereich der Fanschaufel ist zunehmend reduziert.

Die Elastomerschicht ist dabei einteilig und zusammenhängend aus einem Vollelastomer gebildet und nicht mit Hohlräumen versehen.

Die zumindest teilweise Ausbildung der Saugseite der Schaufel durch eine Elastomerschicht ist mit dem Vorteil verbunden, dass durch die Elastomerschicht aufgrund deren vergleichsweise geringen Dichte das Gewicht der Fanschaufel reduziert wird, was zu einer Reduzierung der Einschlaglast und der Umwuchtlast im Falle eines Fanschaufelverlustes führt. Dies gilt in besonderem Maße, wenn die Elastomerschicht im radial äußeren Bereich der Fanschaufel ausgebildet ist. Für diesen Fall kann durch die erfindungsgemäße Lösung eine Reduzierung der Einschlaglast und der Umwuchtlast im Fall eines Fanschaufelverlustes von bis zu 30% erreicht werden.

Ein weiterer Vorteil in der Verwendung einer großflächigen Elastomerschicht besteht darin, dass die großflächig auf die Fanschaufel aufgebrachte Elastomerschicht als Schwingungsdämpfer gegen Schaufelschwingungen dient, die beispielsweise durch Triebwerksschwingungen und deren Frequenzvielfache angeregt werden. Die Eigenschaft der Schwingungsdämpfung hängt damit zusammen, dass die Elastomerschicht ein niedrigeres Elastizitätsmodul aufweist als das sonstige Schaufelmaterial (typischerweise ein Metall bzw. eine Metalllegierung), so dass andere Schwingungseigenschaften bereitgestellt werden.

Ein dritter Vorteil der erfindungsgemäßen Anordnung eines Elastomers auf der Saugseite der Fanschaufel besteht darin, dass die gesonderte Aufbringung eines metallenen Deckels auf die Elastomerschicht und damit die Gefahr einer Rissbildung an der Verbindung eines solchen metallenen Deckels mit dem Fanschaufelgrundkörper im Falle von Überdehnung (zum Beispiels bei Vogelschlag) vermieden werden kann. Dabei ist vorgesehen, dass das Elastomer verschleißbeständig und dementsprechend dazu geeignet ist, die Saugseite der Fanschaufel zu bilden.

Gemäß einer Ausgestaltung der vorliegenden Erfindung ist vorgesehen, dass die Elastomerschicht einen Anteil von 20% bis 80%, insbesondere einen Anteil von 30% bis 50% der Fläche der Saugseite der Schaufel bedeckt. Die großflächige Elastomerschicht bildet dabei eine massive, homogene Struktur aus einem Elastomer. Die Elastomerschicht ist nicht durch voneinander getrennte Einzelteile gebildet, sondern stellt eine einzige, zusammenhängende Struktur dar.

Als Oberfläche der Saugseite der Schaufel, auf die sich der Anteil von mindestens 20% bezieht, wird dabei diejenige an der Saugseite der Schaufel vorhandenen Fläche angesehen, an der beim bestimmungsgemäßen Einsatz der Schaufel in einem Fan Gas bzw. Luft vorbeiströmt.

Gemäß einer Ausgestaltung der Erfindung ist die Elastomerschicht beabstandet zur Vorderkante und/oder beabstandet zur Hinterkante an der Saugseite der Schaufel ausgebildet. Insbesondere liegt eine Beabstandung zur Vorderkante vor, da diese in besonderem Maße einem Beschuss mit eventuell im Gasstrom befindlichen Partikeln oder Objekten standhalten muss und dementsprechend vorteilhafterweise aus einem Metall gebildet ist.

Eine weitere Ausgestaltung der Erfindung sieht vor, dass die Elastomerschicht überwiegend in dem Bereich der Schaufel auf der Saugseite ausgebildet ist, der bezogen auf die Gesamthöhe der Schaufel die radial äußere Hälfte der Schaufel ausmacht. Die Elastomerschicht ist somit überwiegend im radial äußeren Bereich der Schaufel bereitgestellt. Dies ist von besonderem Vorteil, da sich hierdurch das Gewicht der Fanschaufel im radial äußeren Bereich reduziert, was zu einer Reduzierung der Einschlaglast und der Umwuchtlast im Falle eines Fanschaufelverlustes führt. Besonders vorteilhaft ist die Verwendung erfindungsgemäßer hybrider Fanschaufeln bei Triebwerken, bei denen bisher ganzmetallene Fanschaufeln verwendet werden und bei denen die relativ hohe Dicke des äußeren Bereichs der Fanschaufel zur Erzielung eines guten aerodynamischen Profils notwendig ist, aber nicht in demselben Maße zur Festigkeit der ganzmetallenen Fanschaufel beiträgt. Hier kann durch die Anbringung einer großflächigen Elastomerschicht an der Saugseite der Schaufel in besonderem Maße Gewicht eingespart werden. Dabei hat sich herausgestellt, dass die vollständige Dicke der Fanschaufel am radial äußeren Ende für die Schaufelfestigkeit nicht benötigt wird und das ganzmetallische Schaufelmaterial substanziell durch die erfindungsgemäße Elastomerschicht ersetzt werden kann.

Es kann vorgesehen sein, dass die Elastomerschicht sich bis zur Schaufelspitze der Schaufel erstreckt. Da sich die Elastomerschicht unter Fliehkrafteinwirkung aufgrund ihres geringeren E-Moduls von beispielsweise etwa 20 bis 30 N/mm² im Vergleich zu Titan mit einem E-Modul von 105.000 N/mm² stärker radial dehnt, wird die Elastomerschicht an der Fanschaufelspitze gegenüber dem metallischen Grundkörper radial gekürzt. Dadurch wird vermieden, dass die Elastomerschicht unter Fliehkraftdehnunug am Fangehäuse radial anläuft und dadurch beschädigt wird. Alternativ endet die Elastomerschicht in einem Abstand zur Schaufelspitze, der beispielsweise im Bereich zwischen 0,5 mm und 5 cm liegt. Hierdurch kann beispielsweise verhindert werden, dass die Elastomerschicht aufgrund der Fliehkraft sich im Betrieb über die Schaufelspitze hinaus ausdehnt.

Gemäß einer Ausgestaltung der Erfindung ist die Elastomerschicht an der Saugseite im Wesentlichen U-förmig ausgebildet, wobei das offene Ende des U-förmigen Bereichs an der Schaufelspitze endet oder dieser zugewandt ist. Gemäß dieser Ausgestaltung beginnt die Elastomerschicht somit auf der Saugseite in einem mittigen Bereich und verbreitert sich mit zunehmender radialer Höhe bis zur Schaufelspitze oder bis kurz vor der Schaufelspitze.

Es kann vorgesehen sein, dass die Elastomerschicht in dem Bereich der Schaufel, in dem sie angeordnet ist, einen Anteil an der Gesamtdicke der Schaufel von bis zu 50%, von bis zu 60%, von bis zu 70% oder von bis zu 80% aufweist. In dem Bereich der Schaufel, in dem die Elastomerschicht vorgesehen ist, kann sie somit einen substanziellen Anteil an der Dicke der Schaufel ausmachen, von bis zu 80%. Die Dicke der Elastomerschicht steigt dabei vorzugsweise von radial innen nach radial außen kontinuierlich an.

Die Fanschaufel ist gemäß einer vorteilhaften Ausgestaltung der Erfindung abgesehen von der Elastomerschicht als einteilige, ganzmetallische Schaufel ausgebildet. Die Schaufel besteht für diesen Fall aus einem Schaufelgrundkörper aus Metall und der Elastomerschicht, die großflächig die Oberfläche der Saugseite der Schaufel bildet. Weiter ist gemäß einer Ausgestaltung der Erfindung vorgesehen, dass der Schaufelgrundkörper aus einem geschmiedeten Metall besteht. Durch Schmieden kann eine besonders hohe Materialverdichtung erreicht werden, die bei alternativen Verfahren zur Schaufelherstellung wie Metallpulverspritzgießen oder Fräsen nicht erreichbar ist.

Gleichwohl ist die Erfindung keineswegs darauf beschränkt, dass die Fanschaufel in ihrem Schaufelgrundkörper als geschmiedete Schaufel ausgebildet ist. So können auch andere Herstellungsverfahren wie z.B. Metallpulverspritzgießen und Fräsen eingesetzt werden. Auch wird darauf hingewiesen, dass der Schaufelgrundkörper keineswegs zwingend einteilig und massiv ausgebildet sein muss. Beispielsweise kann alternativ vorgesehen sein, dass der Schaufelgrundkörper als Kompositschaufel auf der Basis von Kohlefasern ausgebildet ist. Auch das Gewicht einer solchen Kompositfanschaufel kann im äußeren Bereich durch eine saugseitig aufgebrachte Elastomerschicht reduziert werden, um Spannungen in der Schaufelwurzel zu reduzieren. Auch kann ebenso bei Kompositfanschaufeln durch eine saugseitig aufgebrachte Elastomerschicht eine Reduktion von Fanschaufelschwingungen durch eine Schaufeldämpfung mittels der Elastomerschicht erreicht werden.

Eine weitere Ausgestaltung der Erfindung sieht vor, dass das Schaufelmaterial in dem Bereich, der nicht die Elastomerschicht bildet, eine großflächige Ausnehmung aufweist. In Abwesenheit der Elastomerschicht ist diese großflächige Ausnehmung zur Saugseite der Schaufel hin ausgebildet. Die Elastomerschicht ist auf diese großflächige Ausnehmung aufgebracht und vervollständigt auf diese Weise die Fanschaufel.

Eine solche großflächige Ausnehmung kann beispielsweise beim Schmieden des Schaufelgrundkörpers in die Fanschaufel eingearbeitet werden. Gemäß einer alternativen Lösung erfolgt das Einbringen der Ausnehmung durch Fräsen oder andere spanende Verfahren nach Herstellung des Schaufelgrundkörpers. Nachdem die Elastomerschicht auf die großflächige Ausnehmung aufgebracht ist, kann vorgesehen sein, dass sie anschließend überfräst wird, um exakt die aerodynamisch gewünschte Form der Saugseite bereitzustellen.

Die Elastomerschicht kann beispielsweise als Spritzgussteil oder durch Vulkanisieren eines vorgefertigten Pads bereitgestellt werden. Die Verbindung der Elastomerschicht mit dem Schaufelgrundkörper folgt beispielsweise durch Kleben. Zur Verbesserung der Klebverbindung kann dabei vorgesehen sein, dass bestimmte Oberflächenrauigkeiten des Schaufelgrundkörpers im Bereich der Aussparung und/oder der Elastomerschicht bereitgestellt werden. Zusätzlich und/oder alternativ zu einer klebenden Verbindung zwischen der Elastomerschicht und dem Schaufelgrundkörper können auch formschlüssige Verbindungen bereitgestellt werden.

Die Elastomerschicht kann grundsätzlich aus einem beliebigen Elastomer bestehen, d.h. aus einem beliebigen formfesten, elastisch verformbaren Kunststoff. Die Elastomerschicht wird beispielsweise aus einem fluorierten Kohlenwasserstoff, beispielsweise aus Fluorkautschuk, speziell Copolymer gebildet, wobei die Elastomerschicht gemäß einer Ausgestaltung direkt auf dem metallischen Grundkörper der Fanschaufel aufgebracht und dort vernetzt, bevorzugt peroxidisch vernetzt wird. Copolymer zeichnet sich besonders durch seine Tieftemperaturflexibilität und seine Formstabilität unter Druckbelastung aus. Durch seine Tieftemperaturflexibilität ist es gut für kalte Umgebungstemperaturen beispielsweise im Winter und in großen Flughöhen geeignet. Weiterhin verleiht es der hybriden Fanschaufel eine gute Beständigkeit bei größeren elastischen Deformationen, insbesondere bei Vogelschlag. Die hohe Formstabilität unter Druckbelastung verleiht der hybriden Fanschaufel eine hohe Formstabilität des aerodynamischen Profils und damit eine hohe Effizienz.

Alternativ können durch Spritzgießen oder durch Vulkanisieren vorgefertigter Pads mittels Kleben oder Vulkanisieren auf den ganzmetallenen Grundkörper der Fanschaufel aufgebracht werden. Das Vernetzen, Vulkanisieren oder Kleben vorgefertigter Pads erfolgt in einem Ausführungsbeispiel unter Druck, um eine bessere Verbindung zum Schaufelgrundkörper zu erzielen. Dies kann durch einen oder mehrere flexible oder starre Formkörper erreicht werden, mittels dem oder denen ein vorgefertigtes Pad während des Vernetzens, Vulkanisierens oder Klebens mit einem ausreichend hohen Druck von z.B. im Bereich von 50 kPa bis 1000 kPa, insbesondere im Bereich von 100 kPa bis 200 kPa auf den Schaufelgrundkörper gepresst wird.

Weiter weist die Elastomerschicht eine geringere Dichte als der Schaufelgrundkörper auf. Dies gilt sowohl für den Fall, dass der Schaufelgrundkörper massiv aus Metall gebildet ist (z.B. aus Titan mit einer Dichte von 4,50 g/cm³), als auch für den Fall, dass der Schaufelgrundkörper in Kompositbauweise angefertigt ist, für welchen Fall die Dichte typischerweise bei ca. 1,90 bis 2,00 g/cm³ liegt. In einer vorteilhaften Ausgestaltung liegt die Dichte des Elastomers um mindestens den Faktor 2 oder um mindestens den Faktor 4 niedriger als die Dichte des Schaufelgrundkörpers.

Die Materialwahl kann derart erfolgen, dass die Elastomerschicht an ihrer Außenseite (die die Saugseite der Fanschaufel bildet) eine hohe abrasive Verschleißfestigkeit aufweist. Dies wird beispielsweise erreicht durch die Wahl eines Elastomers mit einer Shore A Härte von mindestens 50, insbesondere von mindestens 60, z.B. von mindestens 80.

Die Erfindung betrifft des Weiteren einen Fan für einen Turbofantriebwerk mit einer Mehrzahl von Schaufeln nach Anspruch 1.

Die Erfindung wird nachfolgend unter Bezugnahme auf die Figuren der Zeichnung anhand mehrerer Ausführungsbeispiele näher erläutert. Es zeigen:
- Figur 1: eine perspektivische Ansicht eines ersten Ausführungsbeispiels von Fanschaufeln, die mit einer Elastomerschicht auf der Saugseite der Fanschaufeln versehen sind;
- Figur 2: ein zweites Ausführungsbeispiel einer Fanschaufel, die mit einer Elastomerschicht auf der Saugseite der Fanschaufel versehen ist;
- Figur 3: in perspektivischer Ansicht die Schaufelspitze einer Fanschaufel gemäß den Figuren 1 oder 2;
- Figur 4: eine Abwandlung der Fanschaufel der Figur 2, bei der die Elastomerschicht sich nicht bis zur Schaufelspitze erstreckt;
- Figur 5A: einen Längsschnitt einer Fanschaufel gemäß den Figuren 1 oder 2;
- Figur 5B: einen Längsschnitt einer Fanschaufel gemäß der Figur 4;
- Figur 6: einen Querschnitt einer Fanschaufel gemäß den Figuren 1 oder 2; und
- Figur 7: einen Längsschnitt durch eine schematische Darstellung eines Turbofantriebwerks.

Die vorliegende Erfindung wird im Folgenden im Hinblick auf Fanschaufeln eines Fans eines Turbofantriebwerkes beschrieben. Die Prinzipien der vorliegenden Erfindung gelten jedoch in gleicher Weise für die Schaufeln eines Propellers. Fanschaufeln im Sinne der vorliegenden Erfindung umfassen ebenfalls Propellerschaufeln.

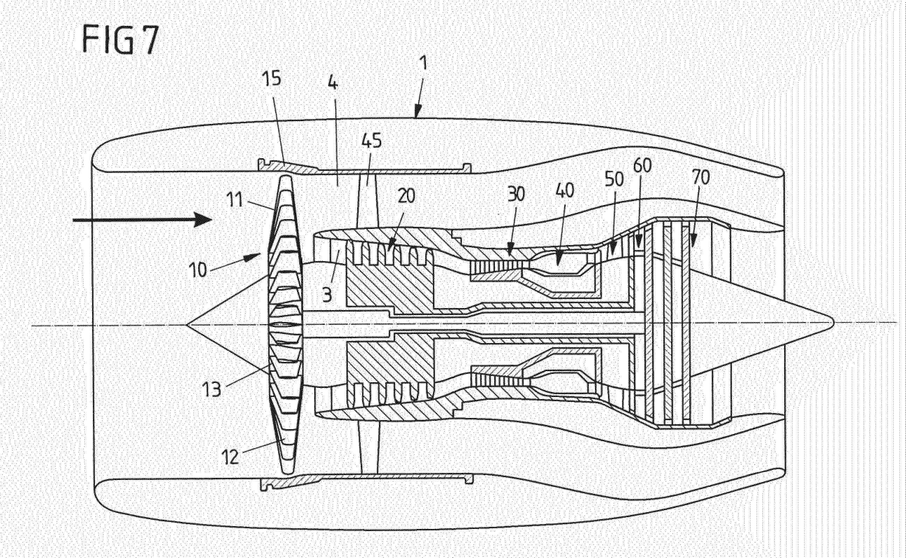

Die Figur 7 zeigt schematisch ein Turbofantriebwerk 1. Das Turbofantriebwerk 1 umfasst einen Niederdruckverdichter 10 mit einem Fan 11, einen Mitteldruckverdichter 20, einen Hochdruckverdichter 30, eine Brennkammer 40, eine Hochdruckturbine 50, eine Mitteldruckturbine 60 und eine Niederdruckturbine 70. Der Mitteldruckverdichter 20 und der Hochdruckverdichter 30 weisen jeweils eine Vielzahl von Verdichterstufen auf, wobei jede Verdichterstufe einen Rotor und einen Stator umfasst. In einer alternativen Ausführung umfasst das Turbofantriebwerk 1 einen Niederdruckverdichter, der im Kerntriebwerk vor dem Hochdruckverdichter 30 angeordnet ist.

Der Niederdruckverdichter 10 umfasst einen Fan 11 mit Fanschaufeln 12, die an einer Fanscheibe 13 befestigt sind. Der Niederdruckverdichter 10 umfasst des Weiteren ein Fangehäuse 15.

In an sich bekannter Weise bildet das Turbofantriebwerk einen Sekundärstromkanal oder Bypass-Kanal 4 und einen Primärstromkanal 3, der durch das Kerntriebwerk führt. Luft wird durch den Fan 11 angesaugt und beschleunigt, wobei zwei Luftströme bereitgestellt werden, ein erster Luftstrom durch den Primärstromkanal 3 und ein zweiter Luftstrom durch den Sekundärstromkanal 4. Im Sekundärstromkanal 4 können dabei Leitschaufeln 45 und/oder Streben angeordnet sein. Die Hochdruckturbine 50, die Mitteldruckturbine 60 und die Niederdruckturbine 70 treiben jeweils über eine Hochdruckwelle, eine Mitteldruckwelle und eine Niederdruckwelle den Hochdruckverdichter 30, den Mitteldruckverdichter 20 und den Fan 11 an.

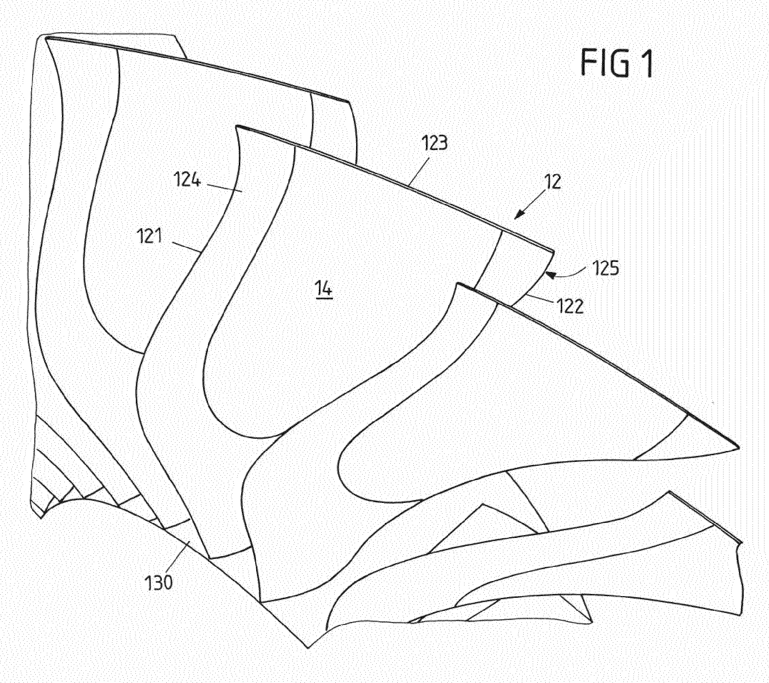

Im Kontext der vorliegenden Erfindung wird eine besondere Konstruktion der Fanschaufeln 12 bereitgestellt, die im Folgenden anhand der Figuren 1 bis 6 erläutert werden wird.

Die Figur 1 ist eine perspektivische Darstellung schräg von vorne auf eine Mehrzahl von Fanschaufeln 12 eines Fans. Die Fanschaufeln 12 sind in BLISK-Bauweise (BLISK = "Blade Integrated Disk") ausgebildet und Teil einer sogenannten Fan-BLISK. Sie weisen dementsprechend keine gesonderten Schaufelfüße auf, sondern sind einstückig mit einer Scheibe 130 der Fan-BLISK verbunden.

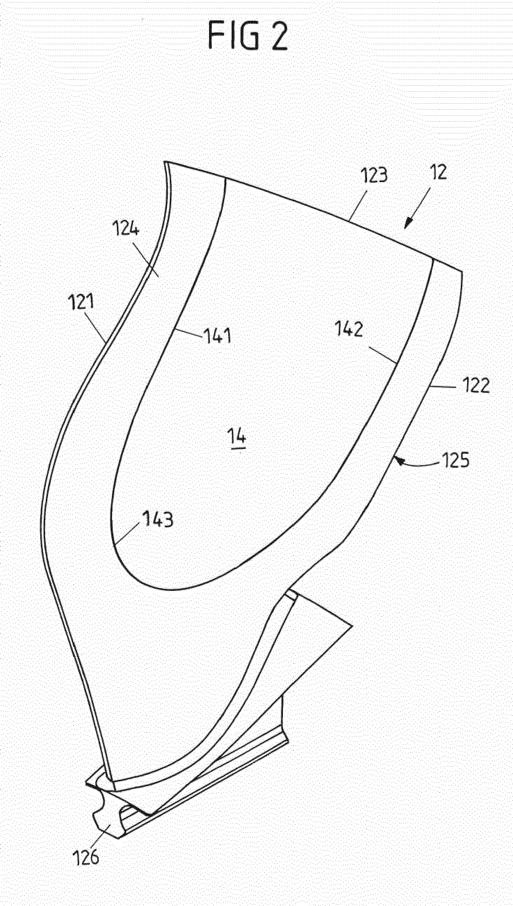

Jede Fanschaufel 12 umfasst eine Vorderkante 121, eine Hinterkante 122, eine Schaufelspitze 123, eine Saugseite 124 und eine Druckseite 125. Ein gesonderter Schaufelfuß ist aufgrund der BLISK-Bauweise im Ausführungsbeispiel der Figur 1 nicht vorgesehen. Wie in Bezug auf die Figur 2 noch erläutert werden wird, können die einzelnen Fanschaufeln 12 jedoch auch mit einem Schaufelfuß ausgebildet sein.

Gemäß der vorliegenden Erfindung umfasst die Fanschaufel 12 des Weiteren eine Elastomerschicht 14, die großflächig auf der Saugseite 124 der Schaufel 12 ausgebildet ist. Eine großflächige Anordnung der Elastomerschicht 14 auf der Saugseite der Schaufel 12 bedeutet dabei, dass die Elastomerschicht mindestens 20% der Fläche der Saugseite 124 der Schaufel 12 einnimmt. Bevorzugt ist dieser Prozentanteil größer und liegt beispielsweise im Bereich zwischen 20% und 80%, insbesondere im Bereich zwischen 30% und 50% der Fläche der Saugseite der Schaufel 12.

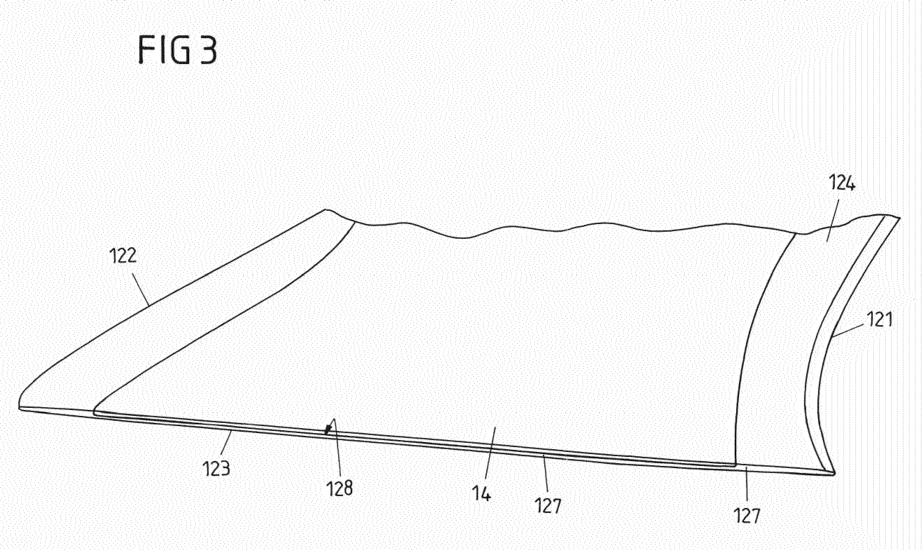

Bei der Elastomerschicht 14 handelt es sich beispielsweise um einen fluorierten Kohlenwasserstoff, insbesondere um einen Fluorkautschuk, der sich durch eine hohe abrasive Verschleißfestigkeit auszeichnet und insofern geeignet ist, die Saugseite der Schaufel 12 zu formen. Die Elastomerschicht 14 ist beispielsweise auf das Schaufelgrundmaterial aufvulkanisiert, wie anhand der Figur 3 noch erläutert werden wird.

Die Figur 2 zeigt ein alternatives Ausführungsbeispiel einer Fanschaufel 12. Beim Ausführungsbeispiel der Figur 2 ist die Fanschaufel 12 zur Verwendung mit einem Steckschaufel-Fan vorgesehen. Dementsprechend weist die Fanschaufel 12 der Figur 2 einen Schaufelfuß 126 auf, der in eine entsprechende Scheibe oder andere Struktur des Fans in an sich bekannter Weise eingesteckt werden kann. Auf die genaue Art der Verbindung der Fanschaufel 12 mit der Fanscheibe 13 (vgl. Figur 7) kommt es dabei im Kontext der vorliegenden Erfindung nicht an.

Was den Aufbau der eigentlichen Fanschaufel 12 angeht, so liegt bei der Figur 2 der gleiche Aufbau wie bei der Fanschaufel der Figur 1 vor. Dementsprechend umfasst die Fanschaufel 12 ebenfalls eine Elastomerschicht 14, die auf der Saugseite 124 der Schaufel 12 angeordnet ist. Im Folgenden wird die Form der Elastomerschicht 14 anhand der Figur 2 näher erläutert. Die Erläuterungen gelten in gleicher Weise für die Figur 1, in der die Elastomerschicht 14 teilweise durch andere Fanschaufeln verdeckt ist.

Danach besitzt die Elastomerschicht 14 eine Form derart, dass sie von der Vorderkante 121 der Fanschaufel 12 beabstandet ist. Des Weiteren ist die Elastomerschicht 14 auch von der Hinterkante 122 der Fanschaufel beabstandet. Die Elastomerschicht 14 bildet dabei einen U-förmig geformten Bereich. Sie wird dementsprechend durch einen gebogenen Bereich 143 begrenzt, an den sich in radialer Richtung zwei Schenkel 141, 142 anschließen, die die Elastomerschicht 14 in axialer Richtung nach vorne und hinten begrenzen. Die Elastomerschicht 14 verbreitert sich dabei in radialer Richtung von einer geringen axialen Ausdehnung im gebogenen Bereich 143 zu einer größer werdenden axialen Ausdehnung zur Schaufelkante 123 hin.

Dabei ist im Ausführungsbeispiel der Figur 2 vorgehen, dass sich die Elastomerschicht 14 bis zur Schaufelkante 123 erstreckt.

Die Schaufel 12 wird in den Bereichen, die nicht durch die Elastomerschicht 14 gebildet sind, durch einen Schaufelgrundkörper gebildet. Hierbei kann es sich um ein einteiliges, geschmiedetes Vollmetall handeln, beispielsweise Titan. Durch Schmieden der Fanschaufel wird dabei eine besonders hohe Materialverdichtung erreicht. Grundsätzlich kann der Schaufelgrundkörper jedoch auch in Kompositbauweise ausgeführt sein, beispielsweise als Kompositfanschaufel auf der Basis von Kohlefasern.

Zur Anordnung der Elastomerschicht 14 an dem Schaufelgrundkörper ist vorgesehen, dass der Schaufelgrundkörper eine großflächige Ausnehmung oder Abflachung aufweist. Dies ist in der Darstellung der Figur 3 zu erkennen, die eine Ansicht aus Richtung der Schaufelspitze 123 zeigt. Danach ist im Schaufelgrundkörper 127 zur Saugseite 124 hin eine großflächige Ausnehmung 128 eingebracht. Diese Ausnehmung 128 kann beispielsweise beim Schmieden des Schaufelgrundkörpers 127 in diesen eingearbeitet werden. Gemäß einer alternativen Ausgestaltung wird die Ausnehmung 128 nachträglich in das Schaufelmaterial eingefräst, eingeschliffen oder in anderer Weise eingebracht.

Die Elastomerschicht 14 wird beispielsweise direkt als Spritzgussmasse auf dem ganzmetallenem Grundkörper 127 in der Spritzgußform vernetzt oder als separates Spritzgussteil hergestellt und anschließend in die Ausnehmung 128 eingeklebt. Alternativ kann z.B. vorgesehen sein, dass die Elastomerschicht 14 durch ein vorgefertigtes Pad bereitgestellt wird, das auf die Aussparung 14 aufvulkanisiert wird. Nach Anbringen bzw. Befestigen der Elastomerschicht 14 in der Aussparung 128 kann vorgesehen sein, dass die Elastomerschicht 14 überfräst oder überschliffen wird, um ihr exakt die gewünschte Formgebung an der Saugseite der Schaufel 12 zu verleihen.

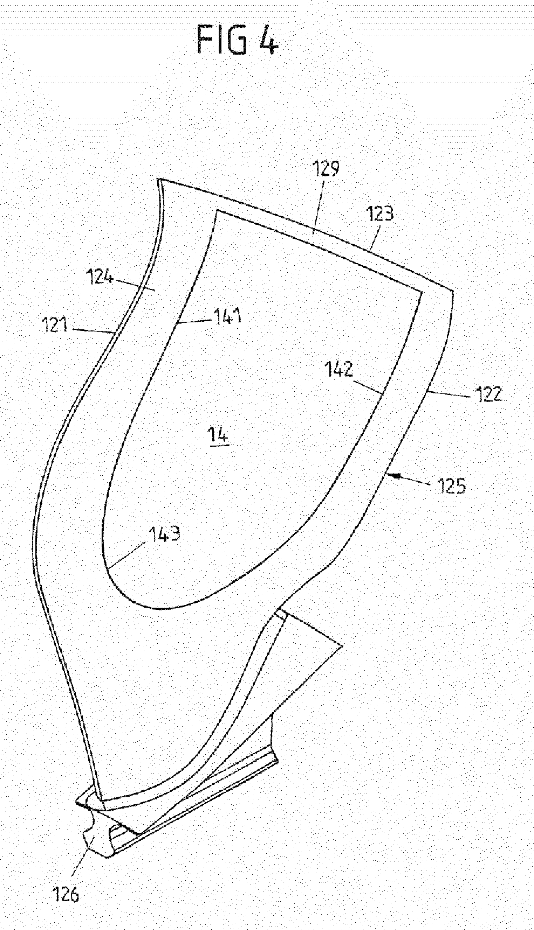

Die Figur 4 zeigt eine Abwandlung der Schaufel der Figur 2. Das Ausführungsbeispiel der Figur 4 unterscheidet sich vom Ausführungsbeispiel der Figur 2 dadurch, dass die Elastomerschicht 14 sich nicht bis zur Schaufelspitze 123 erstreckt, sondern ein Rand 129 zwischen der Schaufelspitze 123 und dem offenen Ende der U-förmigen Elastomerschicht 14 verbleibt. Die Breite des Randes 129 kann dabei beispielsweise zwischen 5 mm und 5 cm liegen.

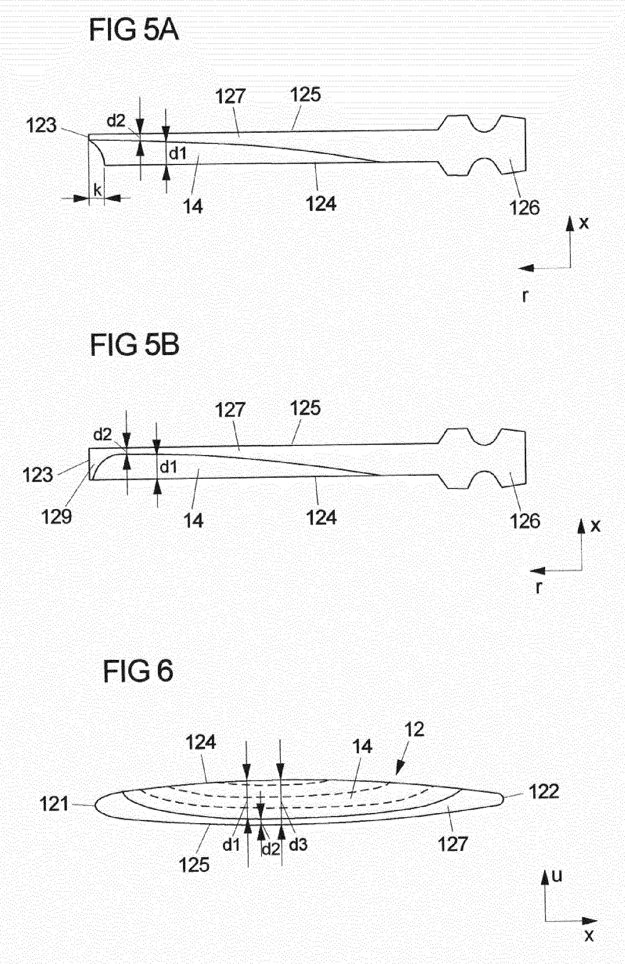

Es ist vorgesehen, dass die Dicke der Elastomerschicht 14 in radialer Richtung und/oder in axialer Richtung variiert. Dies gilt für sämtliche Ausführungsbeispiele der Figuren 1 bis 4. Die Figuren 5A und 5B zeigen die Variation der Dicke d1 der Elastomerschicht 14 in Längsrichtung der Schaufel, d.h. in radialer Richtung r. Die Figur 5A zeigt dabei beispielhaft einen Längsschnitt durch die Schaufel der Figuren 1-3 und die Figur 5B zeigt beispielhaft einen Längsschnitt durch die Schaufel der Figur 4. Dementsprechend erstreckt sich bei der Figur 5A die Elastomerschicht 14 bis zur Schaufelkante 123. Bei der Figur 5B verbleibt der Rand 129 zwischen der Elastomerschicht 14 und der Schaufelkante 123.

Es ist zu erkennen, dass bei beiden Figuren 5A, 5B die Dicke d1 der Elastomerschicht 14 von einem radial innenliegenden Punkt (in dem gebogenen Bereich 143) zur Schaufelspitze 123 hin zunimmt, wobei dies einher geht mit einer nach außen konstant abnehmenden Dicke d2 des metallischen Grundkörpers 127. Hierdurch wird erreicht, dass mit zunehmendem Radius r der Anteil an Metall an der Schaufel abnimmt und dementsprechend zum radial äußeren Bereich der Schaufel das Gewicht der Schaufel zunehmend reduziert wird. Die stetige Zunahme der Dicke d1 der Elastomerschicht 14 zur Schaufelspitze 123 hin bewirkt dabei einen großflächigen Übergang der Steifigkeit der Schaufel in radialer Richtung r.

Dabei wird darauf hingewiesen, dass die benachbart der Schaufelspitze 123 verbleibende Dicke d2 des metallischen Schaufelgrundkörpers 127 ausreichend ist, um die notwendige Schaufelfestigkeit bereitzustellen.

Es ist weiter zu erkennen, dass bei der Figur 5A die Elastomerschicht 14 sich in ihrem radial äußersten Endbereich über den radialen Abstand k wieder verjüngt, d.h. über den Abstand k eine zur Schaufelkante 123 abnehmende Dicke d1 aufweist, ohne dass die Dicke d2 des Schaufelgrundkörpers 127 dabei zunehmen würde. Es liegt insofern eine randseitige Verkürzung der Elastomerschicht 14 vor. Dies ist aber lediglich optional der Fall.

Bei der Figur 5B verbleibt ein Rand 129 zwischen der Elastomerschicht 14 und der Schaufelkante 123. Auch bei der Figur 5B reduziert sich die Dicke d1 der Elastomerschicht 14 in ihrem radial äußersten Endbereich, hier bei zunehmender Dicke d2 des Schaufelgrundkörpers 127. Auch dies ist nur optional der Fall.

Es kann vorgesehen sein, dass die Dicke d1 der Elastomerschicht 14 sich zur Schaufelspitze 123 hin sich auf bis zu 80% der Gesamtdicke der Schaufel 12 vergrößert. Wenn die Schaufel beispielsweise eine Dicke von 5mm aufweist, so kann die Dicke der Elastomerschicht 14 am radial äußeren Ende der Elastomerschicht bis zu 4mm betragen.

Die Figur 6 zeigt schematisch eine Dickenverteilung unter Darstellung eines Querschnittes durch eine Schaufel 12, also eines Schnittes in axialer Richtung x und in Umfangsrichtung u und dabei senkrecht zur radialen Richtung. Danach ist zu erkennen, dass die Dicke d1 der Elastomerschicht 14 zur Vorderkante 121 und zur Hinterkante 122 abnimmt. Im mittleren Bereich ist die Dicke d1 der Elastomerschicht am größten und beträgt die Dicke d2 des Schaufelgrundkörpers 127 nur ca. 50% bis 20%, vorzugsweise 20% der Gesamtdicke d3 der Schaufel 12.

Die gestrichelt dargestellten Linien der Figur 6 geben die Dicke d1 der Elastomerschicht 14 bei Schnitten in anderen radialen Höhen an. Entsprechend der Figur 5 nimmt die Dicke der Elastomerschicht 14 mit der radialen Schaufelerstreckung zu. Die Figur 6 zeigt mit der durchgezogenen Linie somit die Dicke der Elastomerschicht 14 nahe der Schaufelspitze 123.

Es wird darauf hingewiesen, dass eine Dickenverteilung entsprechend der Figur 5 auch in anderer Weise als in Figur 6 dargestellt in axialer Richtung x realisiert sein kann. Beispielsweise kann alternativ vorgesehen sein, dass die Dicke d1 der Elastomerschicht 14 in axialer Richtung x im Wesentlichen konstant ist oder sich nur geringfügig an den Übergängen zum Schaufelgrundkörper 127 reduziert.

Die Erfindung beschränkt sich in ihrer Ausgestaltung nicht auf die vorstehend dargestellten Ausführungsbeispiele, die lediglich beispielhaft zu verstehen sind. Beispielsweise ist die Form der Elastomerschicht 14 in den Figuren 1 bis 4 lediglich beispielhaft zu verstehen. Eine großflächige, zusammenhängende Elastomerschicht kann auch in zahlreichen anderen Formen, beispielsweise kreisförmig, oval oder rechteckförmig bereitgestellt werden. Des Weiteren wird darauf hingewiesen, dass die Form der Schaufel lediglich beispielhaft dargestellt ist, wobei die genaue Form der Schaufel für die vorliegende Erfindung unerheblich ist.

Des Weiteren wird darauf hingewiesen, dass die Merkmale der einzelnen beschriebenen Ausführungsbeispiele der Erfindung in verschiedenen Kombinationen miteinander kombiniert werden können. Sofern Bereiche definiert sind, so umfassen diese sämtliche Werte innerhalb dieser Bereiche sowie sämtliche Teilbereiche, die in einen Bereich fallen.

## Patentansprüche

1. Fanschaufel (12) für einen Flugantrieb, die eine Vorderkante (121), eine Hinterkante (122), eine Saugseite (124), eine Druckseite (125) und eine Schaufelspitze (123) aufweist,
**dadurch gekennzeichnet,**
- **dass** die Fanschaufel (12) eine großflächige Elastomerschicht (14) aufweist, die zumindest 20% der Oberfläche der Saugseite (124) der Fanschaufel (12) bildet und deren Dicke in radialer Richtung nach außen zumindest abschnittsweise derart zunimmt, sodass die Dicke der Elastomerschicht (14) mit zunehmender radialer Höhe der Schaufel (12) entweder kontinuierlich zunimmt oder dass die Dicke der Elastomerschicht (14), nachdem sie eine gewisse Dicke erreicht hat, konstant bleibt, und
- **dass** die nach außen zumindest abschnittsweise zunehmende Dicke der Elastomerschicht (14) mit einer nach außen zumindest abschnittsweise oder konstant abnehmenden Dicke eines metallischen Grundkörpers (127) der Fanschaufel (12), auf den die Elastomerschicht (14) aufgebracht ist, einhergeht, sodass mit zunehmendem Radius der Anteil an Metall an der Fanschaufel (12) abnimmt.

2. Fanschaufel nach Anspruch 1, **dadurch gekennzeichnet, dass** die Elastomerschicht (14) einen Anteil von 20% bis 80%, insbesondere einen Anteil von 30% bis 60% der Oberfläche der Saugseite (124) der Schaufel (12) bildet und/oder dass die Elastomerschicht (14) einen Anteil an der Gesamtdicke der Schaufel (12) von bis zu 50%, bis zu 60%, bis zu 70% oder bis zu 80% aufweist..

3. Fanschaufel nach Anspruch 1 oder 2, **dadurch gekennzeichnet, dass** die Elastomerschicht (14) beabstandet zur Vorderkante (121) und/oder beabstandet zur Hinterkante (122) an der Saugseite (124) der Schaufel (12) ausgebildet ist.

4. Fanschaufel nach einem der vorangehenden Ansprüche, **dadurch gekennzeichnet, dass** die Elastomerschicht (14) sich überwiegend in dem Bereich der Schaufel (12) erstreckt, der bezogen auf die Gesamthöhe der Schaufel (12) die radial äußere Hälfte der Schaufel (12) ausmacht.

5. Fanschaufel nach einem der vorangehenden Ansprüche, **dadurch gekennzeichnet, dass** die Elastomerschicht (14) sich bis zur Schaufelspitze (123) der Schaufel (12) erstreckt.

6. Fanschaufel nach einem der Ansprüche 1 bis 4, **dadurch gekennzeichnet, dass** die Elastomerschicht (14) in einem Abstand zur Schaufelspitze (123) der Schaufel (12) endet.

7. Fanschaufel nach einem der vorangehenden Ansprüche, **dadurch gekennzeichnet, dass** die Elastomerschicht (14) an der Saugseite (124) einen U-förmig geformeten Bereich (141, 142, 143) bildet, wobei das offene Ende des U-förmigen Bereichs an der Schaufelspitze (123) endet oder dieser zugewandt ist.

8. Fanschaufel nach einem der vorangehenden Ansprüche, **dadurch gekennzeichnet, dass** das Schaufelmaterial (127) in dem Bereich, der nicht die Elastomerschicht (14) bildet, eine großflächige Ausnehmung (128) aufweist und die Elastomerschicht (14) auf diese großflächige Ausnehmung (128) aufgebracht ist.

9. Fanschaufel nach einem der vorangehenden Ansprüche, **dadurch gekennzeichnet, dass** die Schaufel (12) einen Schaufelgrundkörper (127) aufweist, mit dem die Elastomerschicht (14) verbunden ist, und der Schaufelgrundkörper (127) durch einen einteiligen, metallischen Körper gebildet ist.

10. Fanschaufel nach einem der vorangehenden Ansprüche, **dadurch gekennzeichnet, dass** die Schaufel (12) einen Schaufelgrundkörper (127) aufweist, mit dem die Elastomerschicht (14) verbunden ist, und der Schaufelgrundkörper (127) als Kompositschaufel auf der Basis von Kohlefasern ausgebildet ist.

11. Fanschaufel nach einem der vorangehenden Ansprüche, **dadurch gekennzeichnet, dass** die Elastomerschicht (14) aus einem fluorierten Kohlenwasserstoff besteht.

12. Fanschaufel nach Anspruch 11, **dadurch gekennzeichnet, dass** als fluorierter Kohlenwasserstoff ein peroxidisch vernetztes Copolymer verwendet wird.

13. Fanschaufel nach einem der vorangehenden Ansprüche, **dadurch gekennzeichnet, dass** die Fanschaufel (12) in BLISK-Bauweise ausgebildet ist.

14. Fan (10) für ein Turbofantriebwerk (1) mit einer Mehrzahl von Fanschaufel (12) nach Anspruch 1.

## Claims

1. Fan blade (12) for an aircraft engine, including a leading edge (121), a trailing edge (122), a suction side (124), a pressure side (125) and a blade tip (123),
**characterized in that**
- the fan blade (12) has a large-area elastomer coating (14) which takes up at least 20% of the surface of the suction side (124) of the fan blade (12) and whose thickness increases outwards in the radial direction at least section by section, such that the thickness of the elastomer coating (14) either continuously increases with increasing radial height of the blade (12), or that the thickness of the elastomer coating (14) remains constant after having reached a certain thickness, and
- that the thickness of the elastomer coating (14) increasing outwards at least section by section, is concomitant with a thickness decreasing outwards at least section by section or constantly of a metallic main body (127) of the fan blade (12) on which the elastomer coating (14) is applied, so that the proportion of metal in the fan blade (12) decreases with increasing radius.

2. Fan blade in accordance with Claim 1, **characterized in that** the elastomer coating (14) covers a proportion of 20% to 80%, in particular a proportion of 30% to 60%, of the surface of the suction side (124) of the blade (12), and/or that the elastomer coating (14) covers a proportion of the total thickness of the blade (12) of up to 50%, up to 60%, up to 70% or up to 80%.

3. Fan blade in accordance with Claim 1 or 2, **characterized in that** the elastomer coating (14) is provided at a distance from the leading edge (121) and/or at a distance from the trailing edge (122) on the suction side (124) of the blade (12).

4. Fan blade in accordance with one of the preceding Claims, **characterized in that** the elastomer coating (14) extends predominantly in that area of the blade (12) that makes up the radially outer half of the blade (12) relative to the overall height of the blade (12).

5. Fan blade in accordance with one of the preceding Claims, **characterized in that** the elastomer coating (14) extends up to the blade tip (123) of the blade (12).

6. Fan blade in accordance with one of the Claims 1 to 4, **characterized in that** the elastomer coating (14) ends at a distance from the blade tip (123) of the blade (12).

7. Fan blade in accordance with one of the preceding Claims, **characterized in that** the elastomer coating (14) on the suction side (124) forms a U-shaped area (141, 142, 143), wherein the open end of the U-shaped area ends at the blade tip (123) or faces the latter.

8. Fan blade in accordance with one of the preceding Claims, **characterized in that** the blade material (127) has a large-area recess (128) in the area not forming the elastomer coating (14), and that the elastomer coating (14) is applied to this large-area recess (128).

9. Fan blade in accordance with one of the preceding Claims, **characterized in that** the blade (12) has a blade main body (127) to which the elastomer coating (14) is connected and that the blade main body (127) is formed by a one-piece metallic body.

10. Fan blade in accordance with one of the preceding Claims, **characterized in that** the blade (12) has a blade main body (127) to which the elastomer coating (14) is connected and that the blade main body (127) is formed as a composite blade on the basis of carbon fibers.

11. Fan blade in accordance with one of the preceding Claims, **characterized in that** the elastomer coating (14) consists of a fluorinated hydrocarbon.

12. Fan blade in accordance with Claim 11, **characterized in that** a peroxide cross-linked copolymer is used as fluorinated hydrocarbon.

13. Fan blade in accordance with one of the preceding Claims, **characterized in that** the fan blade (12) is given a BLISK design.

14. Fan (10) for a turbofan engine (1) having a plurality of fan blades (12) in accordance with Claim 1.

## Revendications

1. Ailette de soufflante (12), destinée à la propulsion d'aéronef, comportant un bord avant (121), un bord arrière (122), un côté aspiration (124), un côté sous pression (125) et une pointe d'ailette (123), **caractérisée en ce que**
- l'ailette de soufflante (12) comporte une couche d'élastomère (14) de grande surface qui forme au moins 20% de la surface côté aspiration (124) de l'ailette de soufflante (12) et dont l'épaisseur augmente au moins par sections dans la direction radiale vers l'extérieur de sorte que l'épaisseur de la couche d'élastomère (14) augmente de manière continue à mesure que la hauteur radiale de l'ailette (12) augmente ou que l'épaisseur de la couche d'élastomère (14) reste constante après avoir atteint une certaine épaisseur, et
- l'épaisseur de la couche d'élastomère (14), qui augmente vers l'extérieur au moins par sections, diminue à mesure que l'épaisseur d'un corps de base métallique (127) de l'ailette de soufflante (12), sur laquelle est appliquée la couche d'élastomère (14), diminue au moins par sections ou constamment vers l'extérieur de sorte que la proportion de métal sur l'ailette de soufflante (12) diminue à mesure que le rayon augmente.

2. Ailette de soufflante selon la revendication 1, **caractérisée en ce que** la couche d'élastomère (14) forme une proportion de 20 % à 80 %, en particulier une proportion de 30 % à 60 %, de la surface côté aspiration (124) de l'ailette (12) et/ou **en ce que** la couche d'élastomère (14) présente une proportion de l'épaisseur totale de l'ailette (12) allant jusqu'à 50 %, jusqu'à 60 %, jusqu'à 70 % ou jusqu'à 80 %.

3. Ailette de soufflante selon la revendication 1 ou 2, **caractérisée en ce que** la couche d'élastomère (14) est formée à distance du bord avant (121) et/ou à distance du bord arrière (122) du côté aspiration (124) de l'ailette (12).

4. Ailette de soufflante selon l'une des revendications précédentes, **caractérisée en ce que** la couche d'élastomère (14) s'étend principalement dans la région de l'ailette (12) qui constitue la moitié radialement extérieure de l'ailette (12) par rapport à la hauteur totale de l'ailette (12).

5. Ailette de soufflante selon l'une des revendications précédentes, **caractérisée en ce que** la couche d'élastomère (14) s'étend jusqu'à la pointe (123) de l'ailette (12).

6. Ailette de soufflante selon l'une des revendications 1 à 4, **caractérisée en ce que** la couche d'élastomère (14) se termine à distance de la pointe (123) de l'ailette (12).

7. Ailette de soufflante selon l'une des revendications précédentes, **caractérisée en ce que** la couche d'élastomère (14) forme du côté aspiration (124) une région (141, 142, 143) en forme de U, l'extrémité ouverte de la région en forme de U se terminant à la pointe (123) d'ailette ou faisant face à celle-ci.

8. Ailette de soufflante selon l'une des revendications précédentes, **caractérisée en ce que** le matériau (127) de l'ailette comporte un évidement (128) de grande surface dans la région qui ne forme pas la couche d'élastomère (14) et la couche d'élastomère (14) est appliquée sur cet évidement (128) de grande surface.

9. Ailette de soufflante selon l'une des revendications précédentes, **caractérisée en ce que** l'ailette (12) comporte un corps de base d'ailette (127) auquel la couche d'élastomère (14) est reliée, et le corps de base d'ailette (127) est formé par un corps métallique monobloc.

10. Ailette de soufflante selon l'une des revendications précédentes, **caractérisée en ce que** l'ailette (12) comporte un corps de base d'ailette (127) auquel la couche d'élastomère (14) est reliée et le corps de base d'ailette (127) est réalisé sous la forme d'une ailette composite à base de fibres de carbone.

11. Ailette de ventilateur selon l'une des revendications précédentes, **caractérisée en ce que** la couche d'élastomère (14) comprend un hydrocarbure fluoré.

12. Ailette de soufflante selon la revendication 11, **caractérisée en ce que** l'on utilise comme hydrocarbure fluoré un copolymère réticulé par un peroxyde.

13. Ailette de soufflante selon l'une des revendications précédentes, **caractérisée en ce que** l'ailette de soufflante (12) est réalisée dans un mode de construction BLISK.

14. Soufflante (10), destinée à un turboréacteur (1), comprenant plusieurs ailettes de soufflante (12) selon la revendication 1.
